# EUROPEAN PATENT SPECIFICATION

(11) **EP 4 624 867 B1**
(45) Date of publication and mention of the grant of the patent: **04.11.2026**
(21) Application number: 25166846.3
(22) Date of filing: 27.03.2025
(51) Int. Cl.: G01C 15/00, G02B 26/10, G01S 17/00, G01S 7/48, G01S 7/497, G01S 17/42

(54) **MEASUREMENT DEVICE**
MESSVORRICHTUNG
DISPOSITIF DE MESURE

(30) Priority: 29.03.2024 JP 2024057064
(43) Date of publication of application: 01.10.2025
(73) Proprietor: TOPCON CORPORATION, Tokyo 174-8580 (JP)
(72) Inventor: OKUDAIRA, Yosuke, Itabashi-ku (JP); MATSUMOTO, Hideyuki, Itabashi-ku (JP); SUGIURA, Akinobu, Itabashi-ku (JP)
(74) Representative: Mewburn Ellis LLP

(56) References cited:
- US-A1- 2014 373 370
- US-A1- 2015 092 198
- US-A1- 2017 168 142
- US-A1- 2020 263 985

## Description

### BACKGROUND OF THE INVENTION

### 1. Field of the Invention

Aspects of the technology description therein relates to a measurement device having an automatic leveling function.

### 2. Description of the Related Art

Conventionally, measurement devices using laser light have been known and employed in various applications, such as receiving the reflected light of emitted laser light to acquire spatial position information on objects or applying laser light to objects to determine reference surfaces or reference lines in civil engineering and construction. In order to expand a measurement range, a measurement device vertically rotates, for example, a laser emission section that emits laser light, while horizontally rotating a base section that supports the laser emission section.

Japanese Patent Application Laid-open No. 2000-180168 discloses an automatic measurement device. The automatic measurement device described in Japanese Patent Application Laid-open No. 2000-180168 includes a collimation telescope, a vertical rotating shaft, a stand, a horizontal rotating shaft, and a base. The vertical rotating shaft is formed inside the collimation telescope. The stand supports the vertical rotating shaft to be rotatable freely. The horizontal rotating shaft is formed inside the stand. The base supports the horizontal rotating shaft to be rotatable freely. Here, there may be a case where a mechanical error angle occurs between the direction orthogonal to the horizontal rotating shaft and the direction of the vertical rotating shaft. In other words, due to a mechanical error in the manufacturing of the measurement device, there may be a case where the vertical rotating shaft is not orthogonal to the horizontal rotating shaft. In this case, it is not possible to emit laser light in the zenith direction. Therefore, when the laser light is emitted in the zenith direction, the measurement accuracy decreases.

Furthermore, Japanese Patent Application Laid-open No. 2021-21678 discloses a measurement device. In the measurement device described in Japanese Patent Application Laid-open No. 2021-21678, a rotation section serving as a laser emission section is covered with a protection case. The protection case is a transparent window such as glass through which laser light passes. In order to expand the measurement range, a plurality of transparent windows are arranged in the rotating direction correspondingly to the rotation section that emits laser light, and are bonded together at end surfaces thereof.

The laser light incident on the incident surface of the transparent window is refracted at the incident surface and travels through the transparent window such as glass. Here, depending on the emitting direction of the laser light, the laser light passes through the bonding surface between a plurality of transparent windows and is emitted to the outside of the protection case. As a result, the transparent window from which the laser light is emitted is a transparent window, which is arranged at an angle different from that of the transparent window on which the laser light has been incident. In this case, the laser light passing through the transparent window is emitted from a transparent window in the direction different from a direction, in which the laser light has been incident on the transparent window. As a result, the laser light is emitted in a direction different from the direction originally intended. Furthermore, the amount of the laser light that passes through the bonding surface between the plurality of transparent windows and is emitted to the outside of the protection case is smaller than the amount of the laser light that does not pass through the bonding surface between the plurality of transparent windows. Therefore, when the laser light passes through the bonding surface between the plurality of transparent windows, the measurement accuracy decreases.

The automatic measurement devices described respectively in Japanese Patent Application Laid-open Nos. 2000-180168 and 2021-21678 have room for improvement in that the measurement accuracy decreases when laser light is emitted in a specified direction.

US 2017/168142 A1 proposes a measuring instrument, which includes a light emitting element, a distance measuring projecting unit, a light receiving unit, a distance measuring unit for performing a distance measurement, a first optical axis deflecting unit for deflecting an optical axis of a distance measuring light, a second optical axis deflecting unit for deflecting a reflected distance measuring light, a projecting direction detecting unit for detecting a deflection angle and a deflecting direction, and a control unit, wherein the distance measuring light is projected through the first optical axis deflecting unit, the reflected distance measuring light is received by a light receiving element through the second optical axis deflecting unit, and the control unit acquires three-dimensional data of a measuring point based on a result of the distance measurement of the distance measuring unit and on a detection result of the projecting direction detecting unit.

### SUMMARY OF THE INVENTION

The present invention has been made in view of the above circumstances and an object thereof is to provide a measurement device as set out in claim 1. It being capable of suppressing a decrease in measurement accuracy when laser light is emitted in a specified direction.

Some embodiments provide for a measurement device according to the present invention, the measurement device including: a leveling mechanism section that performs horizontal leveling; and a measurement device body mounted on the leveling mechanism section, wherein the measurement device body includes a support frame section that has a horizontal rotating shaft and is provided to be rotatable in a horizontal direction, a laser emission section that is connected to a vertical rotating shaft, is supported by the support frame section to be rotatable in a vertical direction, and emits laser light toward an irradiation target, and a computation control section, and when the laser emission section emits the laser light in a specified direction, the computation control section performs control to tilt the leveling mechanism section, by a specified angle, from a leveled state and rotate the vertical rotating shaft in a direction that cancels out tilt of the leveling mechanism section.

In the measurement device according to the present invention, the computation control section performs control to tilt the leveling mechanism section by a specified angle from the leveled state and rotate the vertical rotating shaft in the direction that cancels out the tilt of the leveling mechanism section when the laser emission section emits laser light in a specified direction. Therefore, for example, even if a mechanical error angle occurs between the direction orthogonal to the horizontal rotating shaft and the direction of the vertical rotating shaft, the computation control section tilts the leveling mechanism section by a specified angle from the leveled state and rotates the vertical rotating shaft in the direction that cancels out the tilt of the leveling mechanism section, thereby enabling the laser emission section to emit the laser light in the zenith direction. Furthermore, for example, even if the laser light is emitted toward the bonding surface between a plurality of transparent windows, the computation control section tilts the leveling mechanism section by a specified angle from the leveled state and rotates the vertical rotating shaft in the direction that cancels out the tilt of the leveling mechanism section, thereby preventing the laser light from passing through the bonding surface between the plurality of transparent windows. In the manner described above, the measurement device according to the present invention is capable of suppressing a decrease in measurement accuracy when the laser light is emitted toward a specified direction.

In the measurement device according to the present invention, preferably, the measurement device body further includes a plurality of transparent windows, through which the laser light emitted from the laser emission section passes when emitted to outside, the plurality of transparent windows have different angles and are arranged consecutively in a rotating direction of the laser emission section, end surfaces of the plurality of adjacent transparent windows are bonded together at a bonding surface, and the specified direction is a direction from the laser emission section toward the bonding surface.

In the measurement device according to the present invention, even if the laser light is emitted toward the bonding surface between the plurality of transparent windows, the computation control section tilts the leveling mechanism section by a specified angle from the leveled state and rotates the vertical rotating shaft in the direction that cancels out the tilt of the leveling mechanism section, thereby preventing the laser light from passing through the bonding surface between the plurality of transparent windows. Thus, the measurement device according to the present invention is capable of suppressing a decrease in measurement accuracy when the laser light is emitted toward the bonding surface between the plurality of transparent windows.

In the measurement device according to the present invention, preferably, the measurement device body further includes a storage section, the direction from the laser emission section toward the bonding surface is stored in the storage section, and the specified angle is stored as a correction value in the storage section.

In the measurement device according to the present invention, the direction from the laser emission section toward the bonding surface has been stored in the storage section. Furthermore, the specified angle by which the computation control section tilts the leveling mechanism section from the leveled state has been stored in the storage section as the correction value. Thus, the measurement device according to the present invention is capable of suppressing a decrease in measurement accuracy when the laser light is emitted toward the bonding surface between the plurality of transparent windows, while reducing the time required for computation processing.

In the measurement device according to the present invention, preferably, the specified direction is a zenith direction.

In the measurement device according to the present invention, for example, even if a mechanical error angle occurs between the direction orthogonal to the horizontal rotating shaft and the direction of the vertical rotating shaft, the computation control section tilts the leveling mechanism section by a specified angle from the leveled state and rotates the vertical rotating shaft in the direction that cancels out the tilt of the leveling mechanism section, thereby enabling the laser emission section to emit the laser light in the zenith direction. Thus, the measurement device according to the present invention is capable of suppressing a decrease in measurement accuracy when the laser light is emitted in the zenith direction.

In the measurement device according to the present invention, preferably, the measurement device body further includes a storage section, and the specified angle is a mechanical error angle between a direction orthogonal to the horizontal rotating shaft and a direction of the vertical rotating shaft and is stored as a correction value in the storage section.

In the measurement device according to the present invention, the specified angle by which the computation control section tilts the leveling mechanism section from the leveled state refers to the mechanical error angle between the direction orthogonal to the horizontal rotating shaft and the direction of the vertical rotating shaft, which has been stored in the storage section as the correction value. Thus, the measurement device according to the present invention is capable of suppressing a decrease in measurement accuracy when the laser light is emitted in the zenith direction, while reducing the time required for computation processing.

According to the present invention, it is possible to provide a measurement device capable of suppressing a decrease in measurement accuracy when laser light is emitted in a specified direction.
The foregoing is a non-limiting summary of the invention, which is defined by the attached claims.

### BRIEF DESCRIPTION OF THE DRAWINGS

Various aspects and embodiments of the application will be described with reference to the following figures. Items appearing in multiple figures are indicated by the same or a similar reference number in all the figures in which they appear.
FIG. 1 is a schematic front view of a measurement device according to an embodiment of the present invention;
FIG. 2 is a plan view of the measurement device shown in FIG. 1;
FIG. 3 is a schematic cross-sectional view taken along line A-A in FIG. 1;
FIG. 4 is a block diagram showing the configuration of the optical system of the measurement device shown in FIG. 1;
FIG. 5 is a perspective view of the front and upper sides of the measurement device shown in FIG. 1;
FIG. 6 is a plan view showing a leveling mechanism section according to a specific example of this embodiment;
FIG. 7 is a front view showing the leveling mechanism section according to this specific example;
FIG. 8 is a block diagram for explaining the leveling mechanism section according to this specific example;
FIG. 9 is a schematic view for explaining a first operation of the measurement device according to this embodiment;
FIG. 10 is a schematic view for explaining the first operation of the measurement device according to this embodiment;
FIG. 11 is a flowchart for explaining the first operation of the measurement device according to this embodiment;
FIG. 12 is a schematic view for explaining a second operation of the measurement device according to this embodiment;
FIG. 13 is a schematic view for explaining the second operation of the measurement device according to this embodiment;
FIG. 14 is a schematic view for explaining the second operation of the measurement device according to this embodiment;
FIG. 15 is a schematic view for explaining the second operation of the measurement device according to this embodiment; and
FIG. 16 is a flowchart for explaining the second operation of the measurement device according to this embodiment.

### DESCRIPTION OF THE PREFERRED EMBODIMENTS

Hereinafter, preferred embodiments of the present invention will be described in detail with reference to the drawings.

Note that the following embodiments are suitable specific examples of the present invention and therefore include a variety of technically preferred limitations. However, the scope of the present invention is not limited to these embodiments unless there are specific descriptions that otherwise limit the present invention. Furthermore, in each drawing, the same components will be denoted by the same symbols, and their detailed descriptions will be omitted as appropriate.

A measurement device (hereinafter referred to as "the device") 1 of this embodiment includes a "leveling mechanism section 4" and a "measurement device body 2."

### About Leveling Mechanism Section

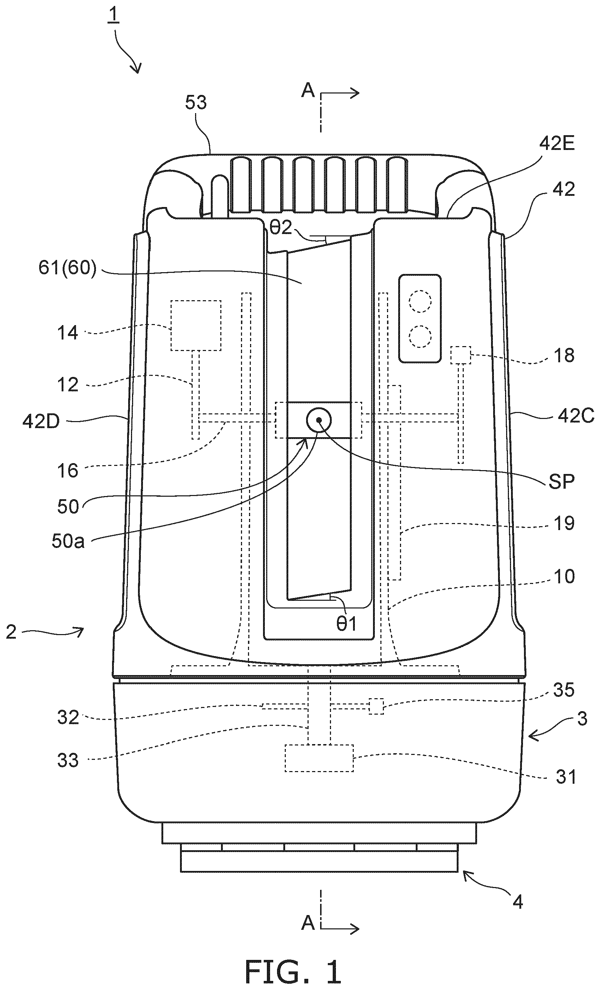

First, the leveling mechanism section 4 will be described with reference to FIG. 1. The leveling mechanism section 4 is fixed onto a tripod and enables automatic leveling in this embodiment. In other words, the leveling mechanism section 4 includes a fixed shaft and a plurality of driving shafts. When a known program operates and the plurality of driving shafts are displaced vertically, a base section 3, which is connected to the leveling mechanism section 4, tilts to achieve horizontal leveling. A specific example of the leveling mechanism section 4 will be described later.

### About Measurement Device Body 2

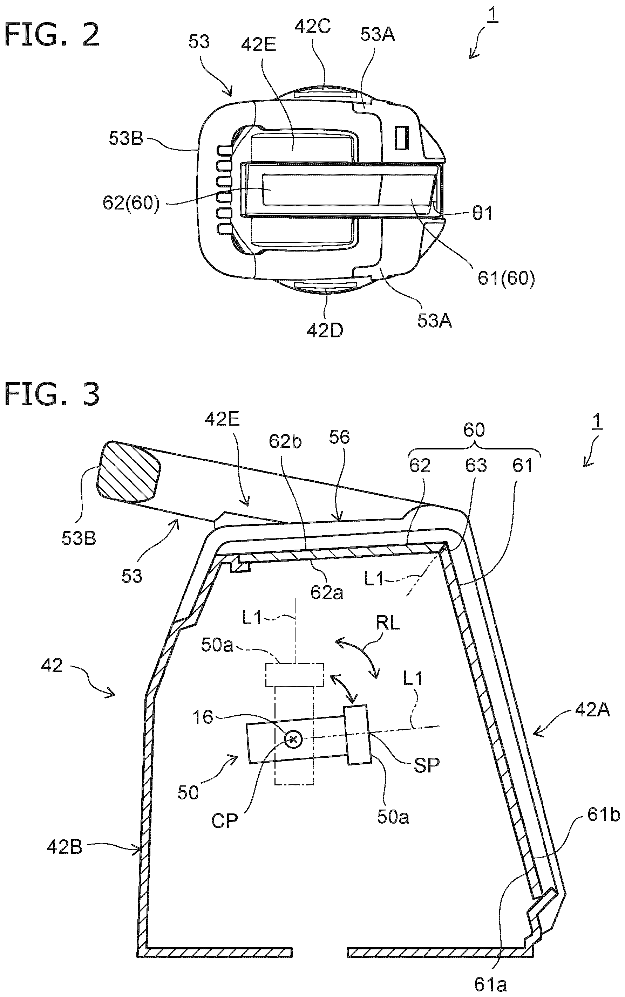

Next, the measurement device body 2 will be described with reference to FIGS. 1 and 3. The measurement device body 2 includes the "base section 3," a "support frame section 10," and a "laser emission section 50."

As shown in FIG. 1, the "base section 3" is connected onto the leveling mechanism section 4. Furthermore, the base section 3 supports the support frame section 10, which is located above the base section 3, and rotates both the support frame section 10 and the laser emission section 50 that is supported by the support frame section 10 integrally in the horizontal direction. The base section 3 of this embodiment includes a motor 31 and a driving gear 32 that is driven by the motor 31. The driving gear 32 meshes with a horizontal rotating shaft 33, which protrudes from the support frame section 10, enabling the support frame section 10 to rotate freely in the horizontal direction. Furthermore, a horizontal angle detector 35 (such as an encoder), which detects the rotation angle of the horizontal rotating shaft 33, is provided inside the base section 3, thereby detecting the rotation angle of the measurement device body 2 in the horizontal direction.

The "support frame section 10" has an overall U-shape and is intended to rotatably support the laser emission section 50 inside the support frame section 10. The support frame section 10 includes a driving gear 12 and a motor 14 that drives the driving gear 12. The driving gear 12 meshes with a vertical rotating shaft 16, which is connected to the laser emission section 50 and is rotatable in the vertical direction, enabling the laser emission section 50 to rotate freely in the vertical direction. Furthermore, a vertical angle detector 18 (such as an encoder), which detects the rotation angle of a vertical rotating shaft 16, is provided within the support frame section 10, thereby detecting the rotation angle of the laser emission section 50 in the vertical direction.

Thus, the rotating shafts 16 and 33, the driving gears 12 and 32, and the motors 14 and 31 cooperate to enable the laser emission section 50 to be oriented in the desired horizontal and vertical directions. Furthermore, the rotation angle detectors 18 and 35 are able to detect the rotation angles of the laser emission section 50 as it rotates in the horizontal and vertical directions. Note that the support frame section 10 is connected to a computation control section 19, which is composed of a circuit that controls the driving motors 14 and 31, as well as the rotation angle detectors 18 and 35. Examples of the computation control section 19 include a central processing unit (CPU).

The "laser emission section 50" is rotatable and emits laser light toward an irradiation target. In this embodiment, the laser emission section 50 is connected to the vertical rotating shaft 16, which is provided within the support frame section 10 described above, and rotates integrally with the vertical rotating shaft 16 in the vertical direction. As shown in FIGS. 1 and 3, the laser emission section 50 has an overall shape that is approximately cylindrical or box-shape, includes a glass cover body 50a at its tip end through which the laser light passes, and is also referred to as a mirror cylinder section. The cover body 50a includes an emission point SP, which is the point where the laser light passes through and is emitted to a transparent window 60, which will be described. The straight line connecting this emission point SP and a rotation central axis CP of the vertical rotating shaft 16, which is offset from the emission point SP, serves as the optical axis of laser light L1, which is emitted toward the irradiation target.

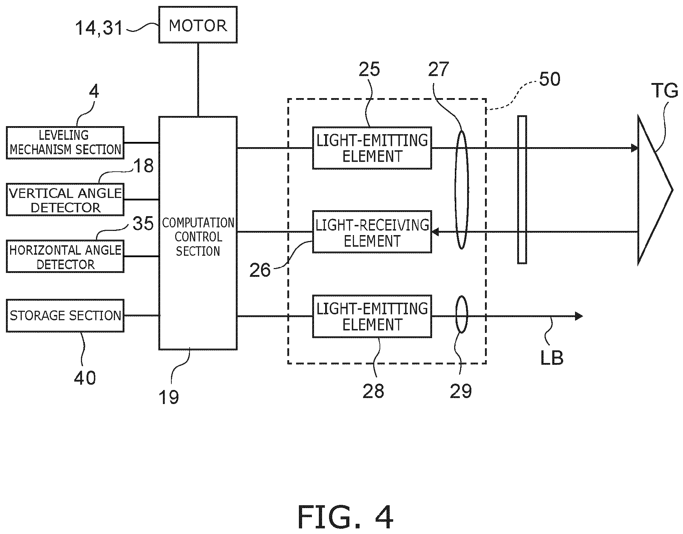

The device 1 with the above configuration performs distance and angle measurement functions, as well as a laser pointer function. Hereinafter, these three functions will be described with reference to the block diagram shown in FIG. 4.

First, when the device 1 is installed, the leveling mechanism section 4 performs automatic leveling on the basis of a signal transmitted from the computation control section 19. As a result, the device 1 enters a leveled state. In the specification of this application, the "leveled state" refers to a state where automatic leveling by the leveling mechanism section 4 has been completed.

The distance and angle measurement functions refer to the ability to perform distance and angle measurements after locking onto a target TG (irradiation target) such as a prism with the retroreflective capability. A known configuration may be used to perform these distance and angle measurement functions. In other words, the laser emission section 50 includes a light-emitting element 25 such as a laser diode that emits laser light, a light-receiving element 26 that receives reflected light from an irradiation target, and a mirror (not shown), a lens 27, or the like, which aligns the optical axis of the emitted laser light with the optical axis of the reflected light from the target TG. According to this configuration, the computation control section 19 performs distance and angle measurements through known calculations on the basis of the light receiving result from the light-receiving element 26, as well as the detection results from the horizontal angle detector 35 and the vertical angle detector 18 described above.

The laser pointer function is designed to trace by irradiating various reference points or points serving as indexes of structures with laser pointer light. For example, laser light is emitted vertically (i.e., toward the zenith) from a reference point on the ground, which is measured by the distance and angle measurement functions. Then, the reference point is traced at each floor of a structure (hereinafter referred to as "vertical measurements"). Alternatively, laser light is emitted toward a column position or the like on the basis of the reference point at each floor, enabling a previously-stored design to be traced on the structure. Thus, the device is used not only for civil engineering surveys such as piling points but also for construction. A known configuration may be used to perform this laser pointer function. The laser emission section 50 includes a light-emitting element 28 that emits laser light LB with a wavelength different from that of the light-emitting element 25 used for distance and angle measurements. The light-emitting element 28 is composed of a laser diode or the like and emits visible light. The laser light LB emitted from the light-emitting element 28 is directed to the outside via a known mirror (not shown), a lens 29, or the like to align with the optical axis of the laser light emitted from the light-emitting element 25 used for distance and angle measurements.

The distance and angle measurement functions and the laser pointer function perform various processing when the computation control section 19 controls each section on the basis of various programs stored in a storage section 40 shown in FIG. **4****.** In the storage section 40, design data such as each reference point is also stored. Examples of the programs include a program that controls distance and angle measurement operations at the estimated position of an irradiation target, a program that calculates a distance and an angle on the basis of the distance and angle measurement operations, a program that calculates an angle on the basis of horizontal angle data and vertical angle data, a program that performs vertical measurements, a program that controls laser pointer light on the basis of design data, a program for setting measurement conditions. Note that the storage section 40 may include various storage means such as a magnetic HD, an optical DVD, and a semiconductor storage type RAM, ROM, or memory card.

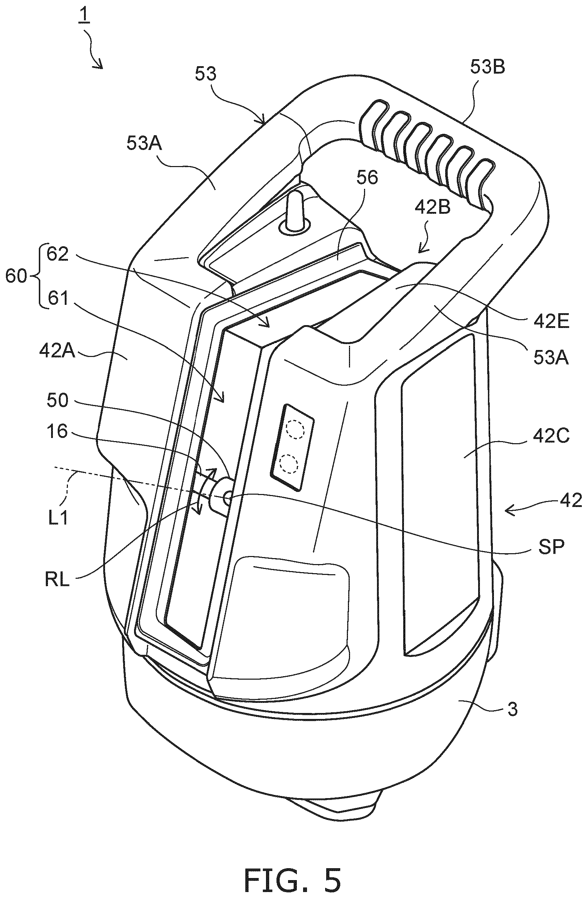

As shown in FIG. 1, a housing 42, which serves as a cover body to protect these sections, accommodates inside the support frame section 10, the laser emission section 50, the computation control section 19, the storage section 40. The housing 42 will be described with reference to FIGS. 2 and 5.

As shown in these figures, the housing 42 has an overall shape that is approximately cylindrical and includes a front surface 42A, a rear surface 42B, right and left lateral surfaces 42C and 42D, and an upper surface 42E, covering all sides and the top. Here, the front surface refers to the side from which laser light is emitted horizontally to perform measurements. On the side of the upper surface 42E of the housing 42, a handle 53 used for raising the device 1 is arranged. The handle 53 includes a grip section 53B that is gripped by the hand, and two support arm sections 53A and 53A, which extend from both ends of the grip section 53B. The support arm sections 53A and 53A are connected to the boundary between the upper surface 42E and the right and left lateral surfaces 42C and 42D. The two support arm sections 53A and 53A are arranged in parallel and are tilted upward from the front surface 42A to the rear surface 42B.

A part of the housing 42 serves as the transparent window 60 through which the laser light emitted from the laser emission section 50 passes to be emitted to the outside. The transparent window 60 will be described primarily with reference to FIGS. 3 and 5.

The transparent window 60 is a light transparent member such as a transparent glass and is connected to the through-hole of the housing 42. Furthermore, the transparent window 60 is arranged in a rotating direction (in this embodiment, a vertical rotating direction) RL of the laser emission section 50. Thus, the laser emission section 50 is able to emit laser light to the outside through the transparent window 60. Note that in the transparent window 60, incident surfaces 61a and 62a, on which the laser light is incident, are parallel to emitting surfaces 61b and 62b, from which the laser light is emitted. Furthermore, the transparent window 60 may be a single piece or may include two or more windows bonded together.

Here, the transparent window 60 is formed by consecutively arranging a plurality of transparent windows 61 and 62 with different angles in the rotating direction RL of the laser emission section 50. The angles refer to the angles in the rotating direction of the laser emission section 50. In this embodiment, the laser emission section 50 rotates in the vertical direction. Therefore, the transparent windows 61 and 62 have different angles in the vertical direction. As shown in FIG. 5, the transparent window 61 is the front transparent window (hereinafter referred to as the "front transparent window 61") arranged on the side of the front surface 42A, while the transparent window 62 is the upper transparent window (hereinafter referred to as the "upper transparent window 62") arranged on the side of the upper surface 42E. The end surface of the front transparent window 61 on the side of the upper surface 42E is bonded to the end surface of the upper transparent window 62 on the side of the front surface 42A. The provision of the upper transparent window 62 following the front transparent window 61 is intended to irradiate a wide range from the wall surface to the ceiling of a structure with laser light when tracing a reference point or a previously-stored design of the structure as described above.

As shown in FIG. 3, the front transparent window 61 has a vertically-oriented shape extending in the vertical direction and is tilted to the side of the rear surface 42B from the side of the base section 3 toward the upper surface 42E. Further, as shown in FIG. 2, the front transparent window 61 is tilted in the horizontal direction so as not to be orthogonal to the optical axis of laser light L1 (i.e., rotated horizontally about the vertical axis). This tilt is intended to prevent the reflected light of the laser light applied to the front transparent window 61 from being incident on the lens 27 (see FIG. 4) of the laser emission section 50, thereby avoiding any adverse effect on measurements. In the figures, the front transparent window 61 has a tilting angle θ1 of approximately 10 degrees.

As shown in FIGS. 3 and 5, the upper transparent window 62 extends from the side of the front surface 42A so that the vertical measurements described above are enabled. In other words, as indicated by a one-dot chain line in FIG. 3, the upper transparent window 62 extends to a position where the laser light emitted at least when the laser emission section 50 is erected vertically (with the cover body 50a oriented directly upward (in the zenith direction)) is able to pass through the upper transparent window 62.

Moreover, the upper transparent window 62 is tilted downward from the upper surface 42E to the rear surface 42B. This downward tilt is intended to prevent the upper transparent window 62 from being touched when gripping the grip section 53B. Note that the handle 53 of this embodiment is located above the upper surface 42E and includes the grip section 53B located behind the upper transparent window 62. In addition, a slender groove section 56 is formed on the upper surface 42E from the side of the front surface 42A to the side of the rear surface 42B, and the upper transparent window 62 is arranged within the groove section 56. This effectively prevents the hand gripping the grip section 53B from coming into contact with the upper transparent window 62.

The upper transparent window 62 is also designed so as not to be orthogonal to the optical axis of the laser light L1 and is tilted in the vertical direction. In other words, as shown in FIG. 1, the upper transparent window 62 has a tilt angle θ2, which is the angle obtained when the upper transparent window 62 is rotated vertically about the horizontal axis. In FIG. 1, the tilt angle θ1 of the front transparent window 61 is the same as the tilt angle θ2 of the upper transparent window 62. Similar to the front transparent window 61, this prevents the reflected light of the laser light applied to the upper transparent window 62 from being incident on the lens 27 (see FIG. 4) of the laser emission section 50, thereby avoiding any adverse effect on measurements.

The end surface of the front transparent window 61 and the end surface of the upper transparent window 62 described above are bonded together at a bonding surface 63 using an adhesive. The laser light L1 is able to pass through the adhesive. In other words, the adhesive that bonds the end surfaces of the front transparent window 61 and the upper transparent window 62 together is made of a material through which the laser light L1 is able to pass.

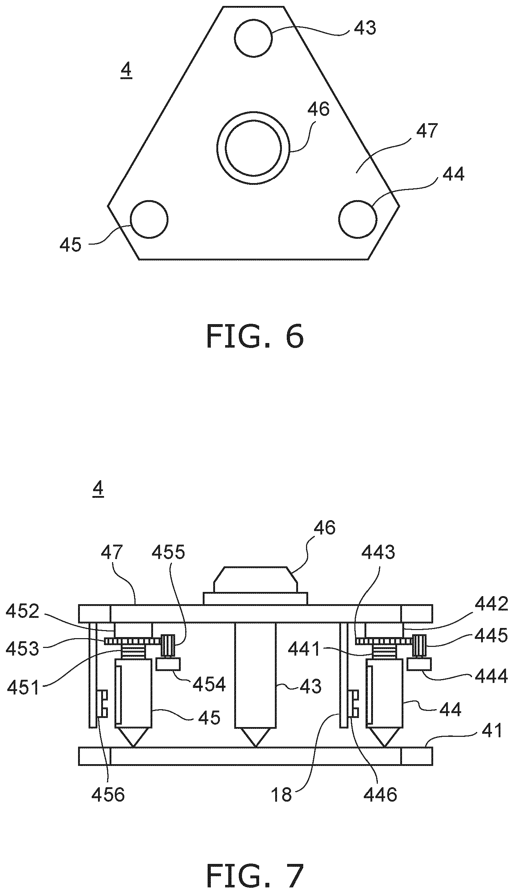

Next, a specific example of the leveling mechanism section 4 will be described with reference to FIGS. 6 to 8.

Note that the leveling mechanism section 4 of this embodiment is not limited to the specific example shown in FIGS. 6 to 8.

The leveling mechanism section 4 according to the specific example shown in FIGS. 6 to 8 includes a base plate 41, a leveling substrate 47, a fixed shaft 43, a right driving shaft 44, and a left driving shaft 45. The base section 3 described above with reference to FIGS. 1 to 5 is installed on the leveling substrate 47.

The fixed shaft 43, the right driving shaft 44, and the left driving shaft 45 extend vertically downward from the leveling substrate 47. The lower ends of the fixed shaft 43, the right driving shaft 44, and the left driving shaft 45 are conical tips. The fixed shaft 43 is provided fixedly. The right and left driving shafts 44 and 45 are restrained from rotating and are designed to be slidable freely in the axial direction.

The upper end of the right driving shaft 44 is a threaded portion 441. A nut portion 442 is threadedly engaged with the threaded portion 441. The nut portion 442 is equipped with a leveling gear 443, and the leveling gear 443 and the nut portion 442 are designed to rotate integrally.

The upper end of the left driving shaft 45 is a threaded portion 451. A nut portion 452 is threadedly engaged with the threaded portion 451. The nut portion 452 is equipped with a leveling gear 453, and the leveling gear 453 and the nut portion 452 are designed to rotate integrally.

The right driving shaft 44 is equipped with a right leveling motor 444. A driving gear 445 is mounted on the output shaft of the right leveling motor 444. The driving gear 445 meshes with the leveling gear 443. As the right leveling motor 444 drives, the nut portion 442 is rotated through the driving gear 445 and the leveling gear 443, resulting in the threaded portion 441 being displaced vertically relative to the leveling substrate 47. In other words, the right driving shaft 44 is displaced vertically in response to the normal and reverse rotation of the nut portion 442.

The left driving shaft 45 is equipped with a left leveling motor 454. A driving gear 455 is mounted on the output shaft of the left leveling motor 454. The driving gear 455 meshes with the leveling gear 453. As the left leveling motor 454 drives, the nut portion 452 is rotated through the driving gear 455 and the leveling gear 453, resulting in the threaded portion 451 being displaced vertically relative to the leveling substrate 47. In other words, the left driving shaft 45 is displaced vertically in response to the normal and reverse rotation of the nut portion 452.

By driving the right leveling motor 444 and the left leveling motor 454 separately, the right and left driving shafts 44 and 45 are displaced independently in the vertical direction. By controlling the displacement of the right and left driving shafts 44 and 45, the leveling substrate 47 is capable of adjusting the tilt in two directions about the fixed shaft 43.

a leveling mechanism section capable of tilting the leveling substrate 47 in two directions includes the threaded portions 441 and 451, the nut portions 442 and 452, the right and left leveling motors 444 and 454, the driving gears 445 and 455 individually.

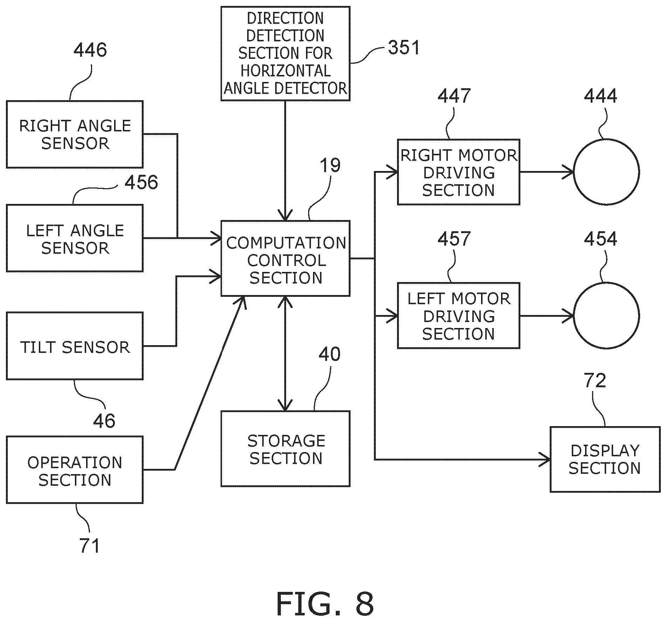

As shown in FIG. 8, the leveling mechanism section 4 further includes a right angle sensor 446 and a left angle sensor 456. The right angle sensor 446 detects the angle of the right driving shaft 44 relative to the horizontal direction of the leveling substrate 47 and transmits a signal related to the angle to the computation control section 19. The left angle sensor 456 detects the angle of the left driving shaft 45 relative to the horizontal direction of the leveling substrate 47 and transmits a signal related to the angle to the computation control section 19.

The computation control section 19 drives the right leveling motor 444 on the basis of the detection result from the right angle sensor 446. Furthermore, the computation control section 19 drives the left leveling motor 454 on the basis of the detection result from the left angle sensor 456. Thus, the computation control section 19 performs automatic leveling such that the leveling substrate 47 becomes horizontal.

Alternatively, a tilt sensor 46 is provided at, for example, the center of the upper surface of the leveling substrate 47. The tilt sensor 46 is capable of detecting tilt in two horizontal directions (e.g., the X-axis direction and the Y-axis direction) with high accuracy in the range of ±2° to ±3°.

The right leveling motor 444, the left leveling motor 454, and the tilt sensor 46 are electrically connected to the computation control section 19. On the basis of the detection result from the tilt sensor 46, the computation control section 19 drives the right leveling motor 444 and the left leveling motor 454 to perform automatic leveling such that the leveling substrate 47 becomes horizontal.

As shown in FIG. 8, the leveling mechanism section 4 further includes a right motor driving section 447 and a left motor driving section 457. The computation control section 19 is connected to an operation section 71 for starting the leveling operation and a display section 72 for displaying, for example, leveling progress, leveling results. The leveling progress includes a state of leveling completion. Furthermore, the leveling results include information on correcting the tilt of the leveling substrate 47, such as the degree of tilt of the leveling substrate 47 in the X-axis direction and the Y-axis direction after leveling, or the direction and amount of rotation of the right leveling motor 444 and the left leveling motor 454.

The storage section 40 stores programs such as a sequence program for causing the right leveling motor 444 and the left leveling motor 454 to perform leveling operations through the right motor driving section 447 and the left motor driving section 457, and a leveling program that calculates the tilt angle and the tilt direction on the basis of detection results from the right angle sensor 446, the left angle sensor 456, and the tilt sensor 46, calculates the driving amounts or the like of the right leveling motor 444 and the left leveling motor 454, and controls the driving of the right motor driving section 447 and the left motor driving section 457. Furthermore, the leveling results are stored in the storage section 40 and are updated to the latest leveling results every time automatic leveling is further performed.

As shown in FIG. 8, the computation control section 19 is electrically connected to a direction detection section 351 for the horizontal angle detector 35. The direction detection section 351 detects the direction of the rotation angle (i.e., horizontal angle) of the horizontal rotating shaft 33 detected by the horizontal angle detector 35 and transmits a signal related to the direction to the computation control section 19.

Next, the operation of the measurement device according to this embodiment will be described with reference to the drawings.

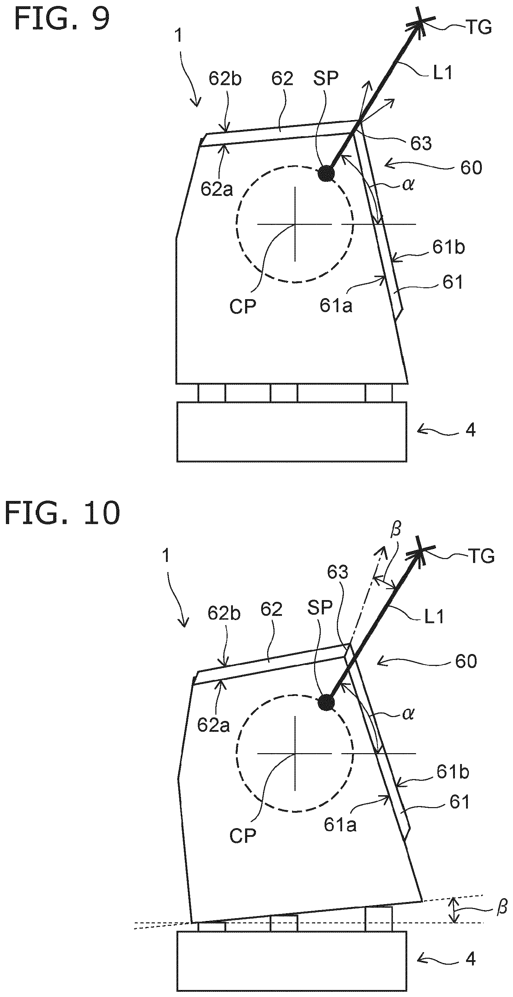

First, with reference to FIGS. 9 to 11, the operation of the device 1 will be described in a case where laser light L1 is emitted toward the bonding surface 63 between the front transparent window 61 and the upper transparent window 62.

The laser light L1 incident on the incident surfaces 61a and 62a of the transparent window 60 is refracted at the incident surfaces 61a and 62a and travels through the transparent window 60 such as glass. Here, as shown in FIG. 9, depending on the emitting direction of the laser light L1, the laser light L1 passes through the bonding surface 63 between the front transparent window 61 and the upper transparent window 62 and is emitted to the outside of the transparent window 60. As a result, the transparent window from which the laser light L1 is emitted is a transparent window (e.g., the front transparent window 61), which is arranged at an angle different from that of a transparent window (e.g., the upper transparent window 62) on which the laser light L1 was incident.

In this case, the laser light L1 passing through the transparent window 60 is emitted from the transparent window 60 in a direction different from the direction in which the laser light L1 was incident on the transparent window 60. As a result, the laser light L1 is emitted in a direction different from the direction originally intended. Furthermore, the amount of the laser light L1 that passes through the bonding surface 63 and is emitted to the outside of the transparent window 60 is smaller than the amount of the laser light L1 that does not pass through the bonding surface 63. Therefore, when the laser light L1 passes through the bonding surface 63, the measurement accuracy decreases.

On the other hand, when the laser emission section 50 emits the laser light L1 in a specified direction, the computation control section 19 of the device 1 according to this embodiment performs control to tilt the leveling mechanism section 4 by a specified angle from the leveled state and rotate the vertical rotating shaft 16 in the direction that cancels out the tilt of the leveling mechanism section 4. In the example shown in FIGS. 9 to 11, the "specified direction" refers to the direction from the laser emission section 50 (specifically, the emission point SP) toward the bonding surface 63.

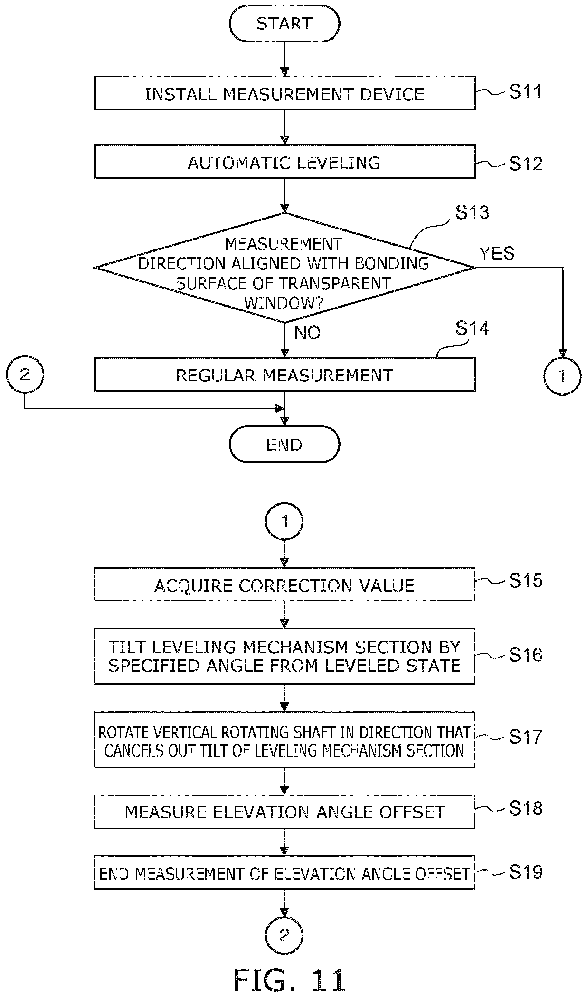

With reference to FIG. 11, the specific operation of the device 1 will be described. First, in step S11, the device 1 is installed at a measurement place. Then, in step S12, the leveling mechanism section 4 performs automatic leveling on the basis of a signal transmitted from the computation control section 19. As a result, the device 1 enters a leveled state.

Next, in step S13, the computation control section 19 determines whether the measurement direction (i.e., the emitting direction of the laser light L1) is aligned with the bonding surface 63 of the transparent window 60. For example, the direction from the laser emission section 50 toward the bonding surface 63, i.e., the angle α (see FIG. 9) between the horizontal direction and the direction from the laser emission section 50 toward the bonding surface 63 has been stored in the storage section 40. By comparing the angle between the horizontal direction and the direction from the laser emission section 50 toward the bonding surface 63 with the angle α that has been stored in the storage section 40, the computation control section 19 determines whether the measurement direction is aligned with the bonding surface 63 of the transparent window 60.

When the measurement direction is aligned with the bonding surface 63 of the transparent window 60 (YES in step S13), the computation control section 19 performs the control of an elevation angle offset measurement mode. In other words, in step S15, the computation control section 19 acquires a correction value that has been stored in the storage section 40. The "correction value" refers to a correction value related to a specified angle by which the computation control section 19 tilts the leveling mechanism section 4 from the leveled state. The angle β shown in the example in FIG. 10 has been stored in the storage section 40 as the correction value.

Next, in step S16, as shown in FIG. 10, the computation control section 19 tilts the leveling mechanism section 4 by the specified angle (i.e., angle β) from the leveled state. Then, in step S17, the computation control section 19 rotates the vertical rotating shaft 16 in the direction that cancels out the tilt of the leveling mechanism section 4. In other words, as shown in FIG. 10, the computation control section 19 rotates the vertical rotating shaft 16 by the angle β to return the irradiation angle of the laser light L1 from the angle α + β to the angle α, and irradiates the target TG with the laser light L1 from the laser emission section 50.

Next, in step S18, the computation control section 19 performs the measurement of the elevation angle offset. In other words, as shown in FIG. 10, the computation control section 19 performs the measurements of the distance and angle of the target TG located at the angle (i.e., elevation angle) α from the horizontal direction. Then, in step S19, the computation control section 19 ends the measurement of the elevation angle offset. Consequently, the operation of the device 1 ends.

On the other hand, when the measurement direction is not aligned with the bonding surface 63 of the transparent window 60 (NO in step S13), the computation control section 19 performs regular measurement in step S14. In other words, the computation control section 19 irradiates the target TG with the laser light L1 from the laser emission section 50 without tilting the leveling mechanism section 4 from the leveled state, and performs the measurements of the distance and angle of the target TG.

According to the operation of the device 1 described with reference to FIGS. 9 to 11, even if the laser light L1 is emitted toward the bonding surface 63 between the front transparent window 61 and the upper transparent window 62, the computation control section 19 tilts the leveling mechanism section 4 by a specified angle (i.e., angle β) from the leveled state and rotates the vertical rotating shaft 16 in the direction that cancels out the tilt of the leveling mechanism section 4, thereby preventing the laser light L1 from passing through the bonding surface 63. Thus, the device 1 according to this embodiment is capable of suppressing a decrease in measurement accuracy when the laser light L1 is emitted toward the bonding surface 63 of the transparent window 60.

Furthermore, the direction from the laser emission section 50 toward the bonding surface 63 has been stored in the storage section 40. Moreover, the specified angle (i.e., angle β) by which the computation control section 19 tilts the leveling mechanism section 4 from the leveled state has been stored in the storage section 40 as the correction value. Thus, the device 1 according to this embodiment is capable of suppressing a decrease in measurement accuracy when the laser light L1 is emitted toward the bonding surface 63 of the transparent window 60, while reducing the time required for computation processing.

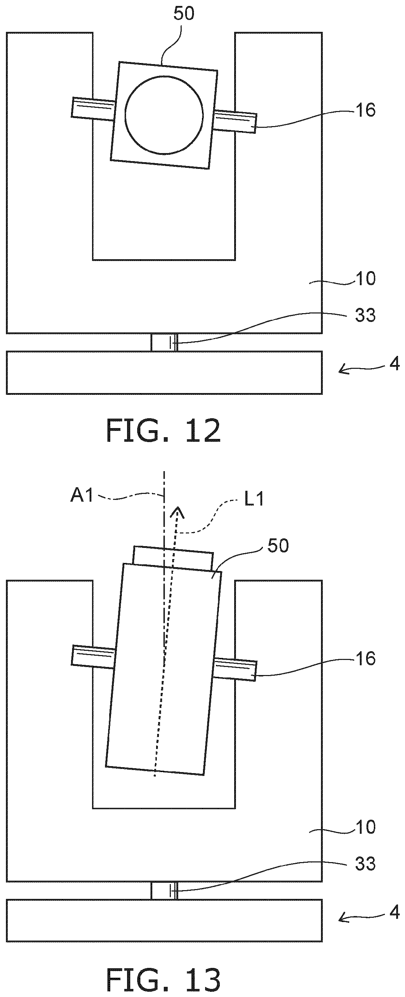

Next, with reference to FIGS. 12 to 16, the operation of the device 1 will be described in a case where a mechanical error angle occurs between the direction orthogonal to the horizontal rotating shaft 33 and the direction of the vertical rotating shaft 16.

As shown in FIG. 12, there may be a case where a mechanical error angle occurs between the direction orthogonal to the horizontal rotating shaft 33 and the direction of the vertical rotating shaft 16. In other words, due to a mechanical error in the manufacturing of the device 1, there may be a case where the vertical rotating shaft 16 is not orthogonal to the horizontal rotating shaft 33. In this case, as shown in FIG. 13, the laser emission section 50 is unable to emit the laser light L1 in the zenith direction A1 even when attempting to emit the laser light L1 in the zenith direction A1. Therefore, when the laser light L1 is emitted in the zenith direction, the measurement accuracy decreases.

On the other hand, when the laser emission section 50 emits the laser light L1 in a specified direction, the computation control section 19 of the device 1 according to this embodiment performs control to tilt the leveling mechanism section 4 by a specified angle from the leveled state and rotate the vertical rotating shaft 16 in the direction that cancels out the tilt of the leveling mechanism section 4. In the example shown in FIGS. 12 to 16, the "specified direction" refers to the zenith direction A1.

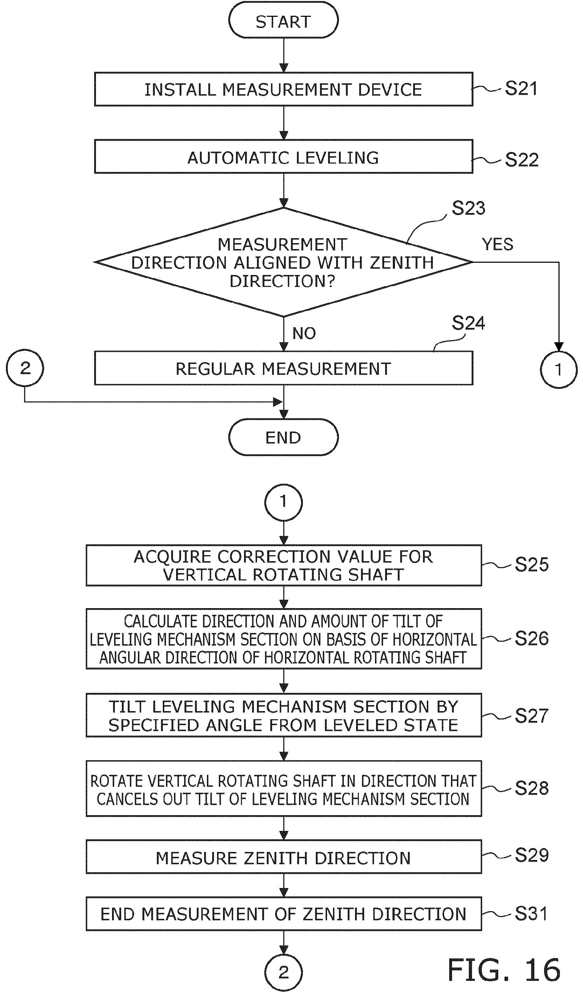

With reference to FIG. 16, the specific operation of the device 1 will be described. First, the operations in steps S21 and S22 are the same as those in steps S11 and S12 described above with reference to FIG. 11. Next, in step S23, the computation control section 19 determines whether the measurement direction (i.e., the emitting direction of the laser light L1) is aligned with the zenith direction A1.

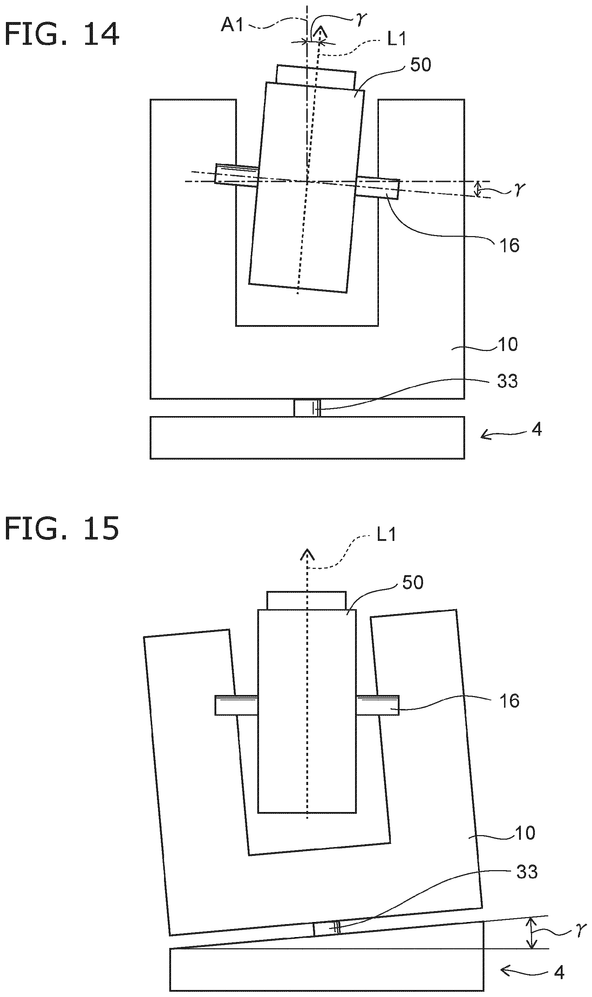

When the measurement direction is aligned with the zenith direction A1 (YES in step S23), the computation control section 19 performs the control of a zenith direction measurement mode. In other words, in step S25, the computation control section 19 acquires a correction value for the vertical rotating shaft 16, which has been stored in the storage section 40. The "correction value for the vertical rotating shaft 16" refers to the mechanical error angle between the direction orthogonal to the horizontal rotating shaft 33 and the direction of the vertical rotating shaft 16. In the example shown in FIG. 14, the angle γ has been stored in the storage section 40 as the correction value for the vertical rotating shaft 16.

Next, in step S26, the computation control section 19 calculates the direction and amount of the tilt of the leveling mechanism section 4 on the basis of the horizontal angular direction of the horizontal rotating shaft 33. As described above with reference to FIG. 8, the computation control section 19 receives a signal related to the horizontal angular direction of the horizontal rotating shaft 33 from the direction detection section 351 of the horizontal angle detector 35. Here, the relationship between the reference angle of the horizontal rotating shaft 33 and the reference direction of the leveling mechanism section 4 has been stored in the storage section 40 in advance. Therefore, the tilt angle that cancels out the machine error angle is determined using the reference angle of the horizontal rotating shaft 33. Thus, regardless of the rotation angle of the horizontal rotating shaft 33, the computation control section 19 is capable of calculating and correcting the tilt angle corresponding to that angle.

Then, in step S27, as shown in FIG. 15, the computation control section 19 tilts the leveling mechanism section 4 by the specified angle (i.e., angle γ) from the leveled state. Next, in step S28, the computation control section 19 rotates the vertical rotating shaft 16 in the direction that cancels out the tilt of the leveling mechanism section 4.

Then, in step S29, the computation control section 19 performs the measurement of the zenith direction A1. In other words, for example, the computation control section 19 performs the measurements of the distance and angle of the target TG located in the zenith direction A1. Next, in step S31, the computation control section 19 ends the measurement of the zenith direction A1. Consequently, the operation of the device 1 ends.

On the other hand, when the measurement direction is not aligned with the zenith direction A1 (NO in step S23), the computation control section 19 performs regular measurement. In other words, the computation control section 19 directs the laser light L1 from the laser emission section 50 toward the zenith direction A1 without tilting the leveling mechanism section 4 from the leveled state, and performs the measurements of the distance and angle of the target TG.

According to the operation of the device 1 described with reference to FIGS. 12 to 16, even if a mechanical error angle occurs between the direction orthogonal to the horizontal rotating shaft 33 and the direction of the vertical rotating shaft 16, the computation control section 19 tilts the leveling mechanism section 4 by a specified angle (i.e., angle γ) from the leveled state and rotates the vertical rotating shaft 16 in the direction that cancels out the tilt of the leveling mechanism section 4, thereby enabling the laser emission section 50 to emit the laser light L1 in the zenith direction. Thus, the device 1 according to this embodiment is capable of suppressing a decrease in measurement accuracy when the laser light L1 is emitted in the zenith direction A1.

Furthermore, the specified angle (i.e., angle γ) by which the computation control section 19 tilts the leveling mechanism section 4 from the leveled state refers to the mechanical error angle between the direction orthogonal to the horizontal rotating shaft 33 and the direction of the vertical rotating shaft 16, which has been stored in the storage section 40 as the correction value for the vertical rotating shaft 16. Thus, the device 1 according to this embodiment is capable of suppressing a decrease in measurement accuracy when the laser light L1 is emitted in the zenith direction A1, while reducing the time required for computation processing.

The embodiments of the present invention have been described above. However, the present invention is not limited to the above embodiments and may be modified in various ways without departing from the scope of the claims. The configurations of the above embodiments may be partially omitted or arbitrarily combined together in ways different from those described above.

## Claims

1. A measurement device (1) comprising:
a leveling mechanism section (4) that performs horizontal leveling; and
a measurement device body (2) mounted on the leveling mechanism section, wherein
the measurement device body includes
a support frame section(10) that has a vertically extending rotary shaft (33) about whose axis the support frame section is rotatable in a horizontal direction,
a laser emission section (50) that is supported by the support frame section (10) by being connected to a horizontally extending rotary shaft (16) thereof about whose axis the laser emission section is rotatable in a vertical direction, and that emits laser light toward an irradiation target, and
a computation control section (19), and
when the laser emission section emits the laser light in a specified direction, the computation control section performs control to tilt the leveling mechanism section, by a specified angle, from a leveled state and rotate the horizontally extending rotary shaft in a direction that cancels out tilt of the leveling mechanism section.

2. The measurement device according to claim 1, wherein the measurement device body further includes a plurality of transparent windows (61, 62), through which the laser light emitted from the laser emission section passes when emitted to outside,
the plurality of transparent windows have different angles and are arranged consecutively in a rotating direction of the laser emission section,
end surfaces of the plurality of adjacent transparent windows are bonded together at a bonding surface, and
the specified direction is a direction from the laser emission section toward the bonding surface.

3. The measurement device according to claim 2, wherein
the measurement device body further includes a storage section (40),
the direction from the laser emission section toward the bonding surface is stored in the storage section, and
the specified angle is stored as a correction value in the storage section.

4. The measurement device according to any one of claims claim 1 to 3, wherein
the specified direction is a zenith direction.

5. The measurement device according to claim 4, wherein
the measurement device body further includes a storage section (40), and
the specified angle is a mechanical error angle between a direction orthogonal to the vertically extending rotary shaft and a direction of the horizontally extending rotary shaft and is stored as a correction value in the storage section.

## Patentansprüche

1. Messvorrichtung (1), umfassend:
einen Nivellierungsmechanismusabschnitt (4), der horizontales Nivellieren durchführt;
und
einen Messvorrichtungskörper (2), der an dem Nivellierungsmechanismusabschnitt angebracht ist, wobei
der Messvorrichtungskörper Folgendes umfasst:
einen Stützrahmenabschnitt (10), der eine sich vertikal erstreckende Drehwelle (33) aufweist, um deren Achse der Stützrahmenabschnitt in eine horizontale Richtung drehbar ist,
einen Laseremissionsabschnitt (50), der durch den Stützrahmenabschnitt (10) gestützt wird, indem er mit einer sich horizontal erstreckenden Drehwelle (16) desselben verbunden ist, um deren Achse der Laseremissionsabschnitt in eine vertikale Richtung drehbar ist, und der Laserlicht in Richtung eines Bestrahlungsziels emittiert und
einen Berechnungssteuerungsabschnitt (19) und
wenn der Laseremissionsabschnitt das Laserlicht in eine spezifizierte Richtung emittiert, der Berechnungssteuerungsabschnitt eine Steuerung zum Neigen des Nivellierungsmechanismusabschnitts um einen spezifizierten Winkel von einem nivellierten Zustand und Drehen der sich horizontal erstreckenden Drehwelle in eine Richtung, welche die Neigung des Nivellierungsmechanismusabschnitts ausgleicht, durchführt.

2. Messvorrichtung nach Anspruch 1, wobei
der Messvorrichtungskörper ferner eine Vielzahl von transparenten Fenstern (61, 62) umfasst, durch die das aus dem Laseremissionsabschnitt emittierte Laserlicht hindurchtritt, wenn es nach außen emittiert wird,
die Vielzahl von transparenten Fenstern verschiedene Winkel aufweist und nacheinander in Drehrichtung des Laseremissionsabschnitts angeordnet sind,
Endflächen der Vielzahl von benachbarten transparenten Fenstern an einer Haftverbindungsfläche haftschlüssig miteinander verbunden sind und
die spezifizierte Richtung eine Richtung von dem Laseremissionsabschnitt hin zur Haftverbindungsfläche ist.

3. Messvorrichtung nach Anspruch 2, wobei
der Messvorrichtungskörper ferner einen Speicherabschnitt (40) umfasst,
die Richtung von dem Laseremissionsabschnitt in Richtung der Haftverbindungsfläche in dem Speicherabschnitt gespeichert ist und
der spezifizierte Winkel als ein Korrekturwert im Speicherabschnitt gespeichert ist.

4. Messvorrichtung nach einem der Ansprüche 1 bis 3, wobei die spezifizierte Richtung eine Zenitrichtung ist.

5. Messvorrichtung nach Anspruch 4, wobei
der Messvorrichtungskörper ferner einen Speicherabschnitt (40) umfasst und
der spezifizierte Winkel ein Winkel eines mechanischen Fehlers zwischen einer Richtung orthogonal zu der sich vertikal erstreckenden Drehwelle und einer Richtung der sich horizontal erstreckenden Drehwelle ist und als ein Korrekturwert im Speicherabschnitt gespeichert ist.

## Revendications

1. Dispositif de mesure (1), comprenant :
une section de mécanisme de mise à niveau (4) qui effectue une mise à niveau horizontale ; et
un corps de dispositif de mesure (2) monté sur la section de mécanisme de mise à niveau, dans lequel
le corps de dispositif de mesure inclut
une section de cadre de support (10) qui présente un arbre rotatif s'étendant verticalement (33) autour de l'axe duquel la section de cadre de support peut tourner dans une direction horizontale,
une section d'émission laser (50) qui est supportée par la section de cadre de support (10) en étant connectée à un arbre rotatif s'étendant horizontalement (16) de celle-ci autour de l'axe duquel la section d'émission laser peut tourner dans une direction verticale, et qui émet de la lumière laser vers une cible d'irradiation, et
une section de commande de calcul (19), et
lorsque la section d'émission laser émet la lumière laser dans une direction spécifiée, la section de commande de calcul effectue une commande pour incliner la section de mécanisme de mise à niveau, d'un angle spécifié, à partir d'un état mis à niveau et faire tourner l'arbre rotatif s'étendant horizontalement dans une direction qui annule l'inclinaison de la section de mécanisme de mise à niveau.

2. Dispositif de mesure selon la revendication 1, dans lequel le corps de dispositif de mesure inclut en outre une pluralité de fenêtres transparentes (61, 62), à travers lesquelles la lumière laser émise à partir de la section d'émission laser passe lorsqu'elle est émise vers l'extérieur,
la pluralité de fenêtres transparentes présentent des angles différents et sont agencées consécutivement dans une direction de rotation de la section d'émission laser,
les surfaces d'extrémité de la pluralité de fenêtres transparentes adjacentes sont liées ensemble au niveau d'une surface de liaison, et
la direction spécifiée est une direction allant de la section d'émission laser vers la surface de liaison.

3. Dispositif de mesure selon la revendication 2, dans lequel
le corps de dispositif de mesure inclut en outre une section de stockage (40),
la direction de la section d'émission laser vers la surface de liaison est stockée dans la section de stockage, et
l'angle spécifié est stocké en tant que valeur de correction dans la section de stockage.

4. Dispositif de mesure selon l'une quelconque des revendications 1 à 3, dans lequel
la direction spécifiée est une direction zénithale.

5. Dispositif de mesure selon la revendication 4, dans lequel
le corps du dispositif de mesure inclut en outre une section de stockage (40), et
l'angle spécifié est un angle d'erreur mécanique entre une direction orthogonale à l'arbre rotatif s'étendant verticalement et une direction de l'arbre rotatif s'étendant horizontalement et est stocké comme valeur de correction dans la section de stockage.
